# EUROPÄISCHE PATENTANMELDUNG

(11) **EP 4 635 655 A1**
(43) Veröffentlichungstag der Anmeldung: **22.10.2025**
(21) Anmeldenummer: 25165513.0
(22) Anmeldetag: 24.03.2025
(51) Int. Cl.: B23B 27/16, B23B 29/04

(54) **SCHNEIDWERKZEUG ZUR SPANENDEN BEARBEITUNG VON WERKSTOFFEN UND SET ZUR HERSTELLUNG EINES SOLCHEN SCHNEIDWERKZEUGS**

(30) Priorität: 03.04.2024 CH 345002024
(71) Anmelder: Utilis AG, 8555 Müllheim (CH)
(72) Erfinder: Champion, François, 8505 Pfyn (CH); Forrer, Thomas, 9500 Wil (CH)
(74) Vertreter: Keller Schneider Patent- und Markenanwälte AG

(57) **Zusammenfassung**

Ein Schneidwerkzeug zur spanenden Bearbeitung von Werkstoffen, insbesondere Metall, beinhaltet einen Halter (10), der eine Ausnehmung (11) zur Aufnahme eines Schneideinsatzes (20) aufweist, wobei die Ausnehmung (11) eine Anlagefläche (12) umfasst, die sich um eine Haltebohrung (13) erstreckt und in welcher mehrere sternförmig um die Haltebohrung (13) angeordnete Vertiefungen (14) ausgebildet sind, und einen Schneideinsatz (20) zur Verbindung mit dem Halter (10), wobei der Schneideinsatz (20) eine ungerade Anzahl von Schneidsegmenten (21) und auf einer Seitenfläche (22) eine ungerade Anzahl von Rippen (24) aufweist, die sternförmig um eine Befestigungsöffnung (23) angeordnet sind, wobei die Rippen (24) so positioniert und zueinander ausgerichtet sind, dass sie in die Vertiefungen (14) des Halters (10) eintauchen können.

## Beschreibung

Die Erfindung betrifft ein Schneidwerkzeug zum spanenden Bearbeiten von Werkstoffen gemäß dem Oberbegriff des Patentanspruchs 1. Ferner betrifft die Erfindung ein Set zur Herstellung eines solchen Schneidwerkzeugs.

Ein Schneidwerkzeug der eingangs genannten Art ist beispielsweise aus EP 1 657 012 B1 bekannt. Das bekannte Schneidwerkzeug umfasst einen Halter, der eine Aufnahme für einen Schneideinsatz umfasst. In der Aufnahme sind mehrere sternförmige Vertiefungen angeordnet, die zu entsprechenden Erhebungen am Schneideinsatz korrespondieren. Die Anordnung der Vertiefungen und Erhebungen ist dabei so gewählt, dass der Schneideinsatz, der zwei diagonal gegenüberliegende Schneidfinger mit Schneidkanten aufweist, in beiden Positionen am Halter befestigt werden kann.

Bei dem bekannten Schneidwerkzeug können ausschließlich Schneideinsätze genutzt werden, die zwei Schneidkanten aufweisen. Sobald diese Schneidkanten verschlissen sind, ist ein neuer Schneideinsatz erforderlich. Das erhöht den Materialeinsatz bei der spanenden Bearbeitung und führt außerdem zu verlängerten Rüstzeiten, da der vollständige Wechsel von Schneideinsätzen zeitlich aufwändiger als das Drehen des Schneideinsatzes zur Verwendung einer gegenüberliegenden Schneidkante ist.

Aufgabe der Erfindung ist es daher, ein Schneidwerkzeug zur spanenden Bearbeitung von Werkstoffen anzugeben, das einen einfachen und schnellen Wechsel von Schneideinsätzen erlaubt und den Materialeinsatz bei der spanenden Bearbeitung reduziert. Ferner ist es Aufgabe der Erfindung, ein Set zur Herstellung eines solchen Schneidwerkzeugs anzugeben.

Erfindungsgemäß wird diese Aufgabe im Hinblick auf das Schneidwerkzeug durch den Gegenstand des Patentanspruchs 1 und im Hinblick auf das Set durch den Gegenstand des Patentanspruchs 12 gelöst.

So beruht die Erfindung konkret auf dem Gedanken, ein Schneidwerkzeug zur spanenden Bearbeitung von Werkstoffen, insbesondere Metall, anzugeben, wobei das Schneidwerkzeug einen Halter umfasst, der eine Ausnehmung zur Aufnahme eines Schneideinsatzes aufweist. Die Ausnehmung umfasst vorzugsweise eine Anlagefläche, die sich um eine Haltebohrung erstreckt und in welcher mehrere sternförmig um die Haltebohrung angeordnete Vertiefungen ausgebildet sind. Erfindungsgemäß ist ein Schneideinsatz zur Verbindung mit dem Halter vorgesehen, wobei der Schneideinsatz eine ungerade Anzahl von Schneidsegmenten aufweist. Ferner weist der Schneideinsatz auf einer Seitenfläche eine ungerade Anzahl von Rippen auf, die sternförmig um eine Befestigungsöffnung angeordnet sind. Die Rippen sind dabei so positioniert und zueinander ausgerichtet, dass sie in die Vertiefungen des Halters eintauchen können.

Die ungerade Anzahl von Schneidsegmenten sowie die ungerade Anzahl von Rippen können jeweils wenigstens drei Schneidsegmente bzw. wenigstens drei Rippen umfassen. Die Verwendung einer ungeraden Anzahl von Rippen stellt zusammen mit der sternförmigen Anordnung sicher, dass die Befestigung des Schneideinsatzes am Halter über ineinandergreifende Rippen und Vertiefungen erfolgt, die winklig zueinander ausgerichtet sind. Insbesondere können zwei benachbarte Rippen zu einem gemeinsamen Mittelpunkt und zueinander unter einem Winkel ausgerichtet sein, wobei alle Winkel zwischen jeweils zwei unmittelbar benachbarten Rippen gleich sind. Mit anderen Worten sind die Rippen vorzugsweise so zueinander ausgerichtet, dass keine der Rippen mit einer anderen Rippe fluchtend angeordnet ist.

Durch die winklige Ausrichtung wird die Stabilität der Verbindung zwischen dem Halter und dem Schneideinsatz gesteigert. Insbesondere können so auf den Schneideinsatz wirkende Kräfte gut an den Halter übertragen werden. Dies vermeidet Vibrationen und damit Ungenauigkeiten in der spanenden Bearbeitung.

Bei einer bevorzugten Ausführungsform der Erfindung kann vorgesehen sein, dass die Vertiefungen in der Ausnehmung des Halters Haltenuten und Aufnahmenuten umfassen. Die Haltenuten sind vorzugsweise komplementär zur Form der Rippen ausgebildet, um einzelne Rippen formschlüssig zu halten. Die Aufnahmenuten können größer als die Rippen ausgebildet sein, um einzelne Rippen mit Spielpassung aufzunehmen. Vorzugsweise sind wenigstens drei Vertiefungen als Haltenuten ausgebildet. Dabei kann vorgesehen sein, dass jeweils zwischen zwei Haltenuten eine Aufnahmenut angeordnet ist. Wegen der ungeraden Anzahl der Vertiefungen ist vorzugsweise zwischen zwei der Haltenuten keine Aufnahmenut vorgesehen.

Die Haltenuten dienen insofern dazu, eine formschlüssige Verbindung zwischen dem Schneideinsatz zu dem Halter herzustellen. Auf diese Weise ist der Schneideinsatz stabil und fest am Halter befestigt. Durch die Aufnahmenuten wird hingegen verhindert, dass eine überbestimmte Lagerung bzw. Befestigung erfolgt. Eine solche überbestimmte Befestigung birgt die Gefahr, dass während der spanenden Bearbeitung Vibrationen entstehen, die dann zu einer Verschlechterung der Oberflächengüte am Werkstück führen. Die Spielpassung, die zwischen den Rippen und den Aufnahmenuten eingestellt ist, bietet also einen Freiraum, um insbesondere auch thermisch bedingte Verformungen des Schneideinsatzes zu kompensieren. Auf diese Weise werden Verspannungen korrigiert, die eine Quelle für Vibrationen darstellen und damit zu Qualitätseinbußen bei der spanenden Bearbeitung führen können.

Die Rippen können eine trapezförmige oder dreiecksförmige Querschnittskontur aufweisen. Eine solche Querschnittskontur ist zweckmäßig, um einen selbstzentrierenden Effekt zu erreichen. Der Schneideinsatz lässt sich auf diese Weise besonders einfach und sicher positionieren und mit dem Halter verbinden.

Im Hinblick auf eine Stabilisierung der Verbindung zwischen Schneideinsatz und Halter in verschiedene Raumrichtungen ist es zweckmäßig, wenn die Haltenuten zueinander Y-förmig ausgerichtet sind. So können in unterschiedliche Richtungen wirkende Kräfte gut durch die Verbindung zwischen der jeweiligen Rippe und der Haltenut aufgenommen werden. Die Y-förmige Ausrichtung der Haltenuten verhindert außerdem, dass sich das Schneidwerkzeug entlang einer Haltenut verschiebt oder in dieser Richtung Vibrationen erzeugt, die sich auf die spanende Bearbeitung negativ auswirken können.

Bei einigen Ausführungsformen kann vorgesehen sein, dass die Vertiefungen winklig zueinander ausgerichtet sind, wobei die Winkel zwischen den benachbarten Vertiefungen vorzugsweise gleich sind. Eine gleichwinklige Ausrichtung der Vertiefungen zueinander ermöglicht es insbesondere, den Schneideinsatz in unterschiedlichen Positionen mit dem Halter zu verbinden, so dass auf diese Weise unterschiedliche Schneidsegmente für die spanende Bearbeitung eingesetzt werden können. Der Schneideinsatz kann im Wesentlichen also in unterschiedliche Winkelstellungen verdreht mit dem Halter verbunden werden. So ist ein Wechsel des Schneidsegments einfach und schnell erreichbar.

Um den Schneideinsatz auch in einer weiteren Raumdimension fest mit dem Halter zu verbinden, insbesondere die Seitenfläche des Schneideinsatzes fest an die Anlagefläche des Halters zu drängen, ist bevorzugt vorgesehen, dass die Haltebohrung ein Innengewinde zur Aufnahme einer Befestigungsschraube aufweist. Auf diese Weise kann mit einer einzelnen Befestigungsschraube eine schnelle und sichere Verbindung zwischen dem Schneideinsatz und dem Halter hergestellt werden.

Die Befestigungsöffnung kann hingegen als, insbesondere zylinderförmige, Durchgangsöffnung ausgebildet sein. Die Durchgangsöffnung kann durch die Befestigungsschraube eine Spielpassung aufweisen. Damit ist sichergestellt, dass die Befestigungsschraube lediglich eine kraftschlüssige Verbindung zwischen der Seitenfläche des Schneideinsatzes und der Anlagefläche des Halters bzw. dessen Ausnehmung bewirkt. Kräfte, die in der Ebene des Schneideinsatzes auftreten, werden hingegen vielmehr durch die formschlüssige Verbindung zwischen den Rippen und den Haltenuten aufgenommen. Insofern erfolgt die Zentrierung des Schneideinsatzes in der Ausnehmung des Halters vorzugsweise durch die Rippen, insbesondere deren dreieckförmige oder trapezförmige Querschnittskontur. Dies bewirkt, dass die Haltenuten eine komplementäre Querschnittskontur aufweisen, um eine Zentrierung des Schneideinsatzes in der Ausnehmung des Halters zu ermöglichen.

Die Schneidsegmente können ebenfalls sternförmig um die Befestigungsöffnung angeordnet sein. Insbesondere kann die Anzahl der Schneidsegmente der Anzahl der Rippen entsprechen. Es hat sich gezeigt, dass auf diese Weise eine besonders gute Abstützung der auf die Schneidsegmente wirkenden Kräfte erreicht wird.

Bevorzugt ist es außerdem, wenn die Schneidsegmente jeweils eine Schneidspitze aufweisen, wobei alle Schneidspitzen gemeinsam ein virtuelles, gleichseitiges Vieleck aufspannen. Das gleichseitige Vieleck kann insbesondere ein regelmäßiges Fünfeck sein. Mit anderen Worten sind die Schneidspitzen auf einem Umfangskreis des Schneideinsatzes um dasselbe Bogenmaß voneinander beabstandet. Dadurch wird sichergestellt, dass der Schneideinsatz durch einfache Drehung um einen vorbestimmten Winkel in unterschiedlichen Positionen mit dem Halter verbindbar ist, wobei die jeweils zur spanenden Bearbeitung eingesetzte Schneidspitze dieselbe Position gegenüber dem Halter einnimmt. Überdiese ist diese sternförmige Anordnung von Schneidspitzen besonders einfach herstellbar und bietet zudem eine geometrische Stabilität.

Die Dauerfestigkeit des Schneideinsatzes wird dadurch erhöht.

Ebenso können die Rippen so ausgerichtet sein, das deren radial äußere Enden ein virtuelles, insbesondere gleichseitiges Vieleck, vorzugsweise ein regelmäßiges Fünfeck, aufspannen. Bevorzugt ist es, wenn das virtuelle Vieleck der Rippen und das virtuelle Vieleck der Schneidspitzen die gleiche Anzahl an Ecken aufweist. Die beiden virtuellen Vielecke weisen insbesondere dasselbe Zentrum auf. Allerdings ist vorteilhaft vorgesehen, dass das virtuelle Vieleck der Rippen und das virtuelle Vieleck der Schneidspitzen verdreht zueinander ausgerichtet sind. Mit anderen Worten liegen die Ecken jeweils auf unterschiedlichen, zum gemeinsamen Zentrum bzw. Mittelpunkt verlaufenden Radialstrahlen. Der gemeinsame Mittelpunkt liegt vorzugsweise auf der Mittelachse der Befestigungsöffnung.

Ein nebengeordneter Aspekt der Erfindung betrifft ein Set zur Herstellung eines zuvor beschriebenen Schneidwerkzeugs. Das Set umfasst vorzugsweise einen zuvor beschriebenen Halter und mehrere zuvor beschriebene Schneideinsätze, wobei sich die Schneideinsätze voneinander unterscheiden können. Die Schneideinsätze sind vorzugsweise austauschbar mit dem Halter verbindbar, insbesondere mittels einer Befestigungsschraube verschraubbar. Die Schneideinsätze können sich insbesondere dadurch unterscheiden, dass sie unterschiedliche Schneidspitzen aufweisen. So können Schneidspitzen mit Schneidkanten vorgesehen sein, die eine in Querrichtung breite Abtragung von Material bei der spanenden Bearbeitung ermöglichen. Andere Schneidspitzen können so gestaltet sein, dass sie das Schneiden eines Gewindes ermöglichen.

Die Erfindung wird im Folgenden anhand von Ausführungsbeispielen unter Bezugnahme auf die beigefügte, schematischen Zeichnungen näher erläutert. Darin zeigen
- Fig. 1: eine perspektivische Explosionsansicht des erfindungsgemäßen Schneidwerkzeugs nach einem bevorzugten Ausführungsbeispiel, wobei das Schneidwerkzeug von einer Vorderseite gezeigt ist;
- Fig. 2: eine weitere perspektivische Explosionsdarstellung des Schneidwerkzeugs gemäß Fig. 1, wobei das Schneidwerkzeug von einer Rückseite dargestellt ist;
- Fig. 3: eine weitere perspektivische Explosionsansicht des Schneidwerkzeugs gemäß Fig. 1, wobei der Halter und der Schneideinsatz um 90° gedreht zueinander dargestellt sind;
- Fig. 4: eine Draufsicht auf die Seitenfläche des Schneideinsatzes des Schneidwerkzeugs gemäß Fig. 1, auf welcher die Rippen angeordnet sind; und
- Fig. 5: eine Draufsicht auf die Ausnehmung des Halters des Schneidwerkzeugs gemäß Fig. 1.

In den beigefügten Zeichnungen ist ein Ausführungsbeispiel eines Schneidwerkzeugs zur spanenden Bearbeitung von Werkstoffen, insbesondere zur spanenden Bearbeitung von Metallen gezeigt. Ein solches Schneidwerkzeug kann insbesondere zum Drehen oder Fräsen von Metallwerkstücken, beispielsweise Aluminiumwerkstücken, eingesetzt werden.

Das Schneidwerkzeug umfasst einen Halter 10, der in einer Bearbeitungsmaschine fixiert werden kann. An seinem vorderen Ende weist der Halter 10 eine Ausnehmung 11 auf, die gestaltet ist, um einen Schneideinsatz 20 aufzunehmen. Die Ausnehmung 11 umfasst eine Anlagefläche 12, gegen welche sich eine Seitenfläche 22 des Schneideinsatzes 20 anlegen kann. Die Anlagefläche 12 ist um eine Haltebohrung 13 herum angeordnet. Die Haltebohrung 13 erstreckt sich durch den Halter 10 und mündet in der Ausnehmung 11. Die Haltebohrung 13 kann vorzugsweise ein Innengewinde aufweisen, das zu einem Außengewinde einer Befestigungsschraube 30 korrespondiert.

Die Ausnehmung 11 kann ferner durch eine Werkzeugkontur 15 begrenzt sein, die im Wesentlichen einen Teil der Außenkontur des Schneideinsatzes 20 wiederholt. Die Werkzeugkontur 15 dient dabei insbesondere als Berührungsschutz, so dass Schneidsegmente 21 des Schneideinsatzes 20, die nicht für die spanende Bearbeitung im Einsatz sind, abgedeckt sind. Das reduziert die Verletzungsgefahr für Benutzer des Schneidwerkzeugs.

In der Anlagefläche 12 sind mehrere Vertiefungen 14 ausgebildet. Die Vertiefungen 14 erstrecken sich sternförmig von der Haltebohrung 13 aus. Bei dem hier dargestellten Ausführungsbeispiel sind jeweils fünf Vertiefungen 14 vorgesehen. Eine andere Anzahl von Vertiefungen 14 ist möglich, wobei bevorzugt eine ungerade Anzahl von Vertiefungen 14 vorgesehen ist.

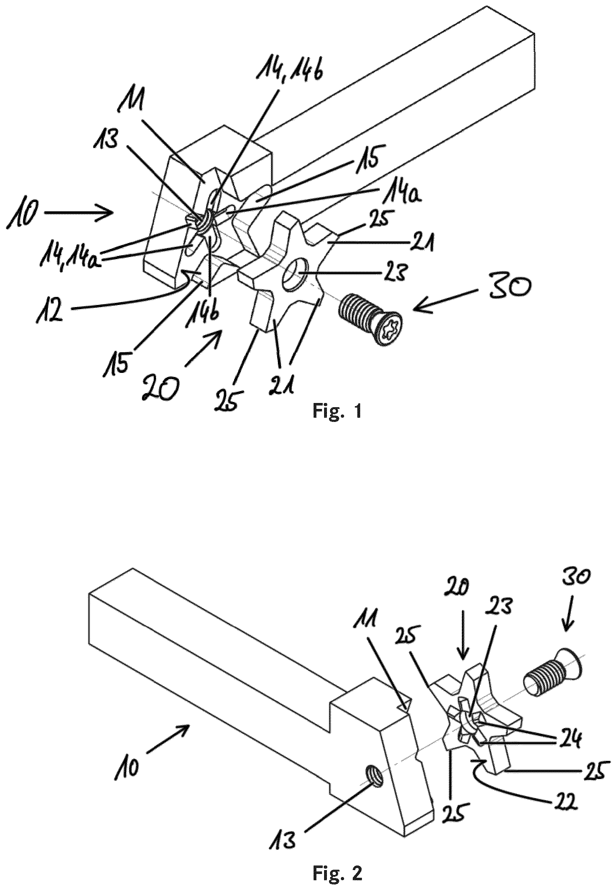

Wie in den Fig. 1, 2 und 3 gut erkennbar ist, umfasst das Schneidwerkzeug neben dem Halter 10 und der Befestigungsschraube 30 auch einen Schneideinsatz 20. Der Schneideinsatz 20 ist bei dem hier dargestellten Ausführungsbeispiel als Fünfschneider ausgebildet, weist also fünf Schneidsegmente 21 auf. Andere Schneideinsätze 20 sind ebenfalls denkbar, insbesondere Schneideinsätze 20 mit einer anderen Anzahl von Schneidsegmenten 21. Bevorzugt ist es jedoch, wenn die Anzahl der Schneidsegmente ungerade ist. Insofern können also 3, 5 oder 7 Schneidsegmente 21 vorgesehen sein.

Der Schneideinsatz 20 weist eine Befestigungsöffnung 23 auf, die sich zentral durch den Schneideinsatz 20 erstreckt. Die Befestigungsöffnung 23 ist vorzugsweise gewindefrei ausgebildet. Der Durchmesser der Befestigungsöffnung 23 ist vorteilhafterweise so gewählt, dass die Befestigungsschraube 30 die Befestigungsöffnung 23 mit Spiel durchgreifen kann.

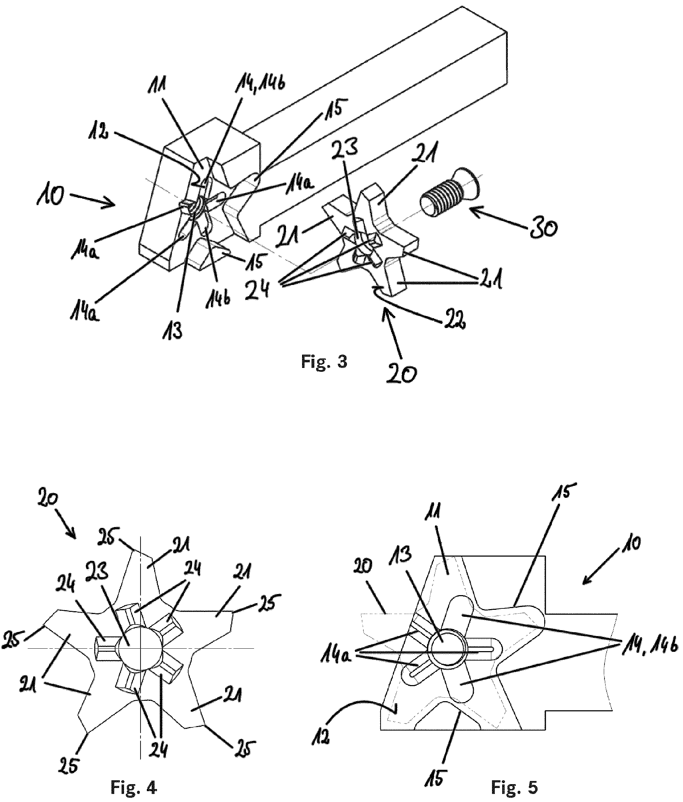

Wie insbesondere in den Fig. 2 und 3 gut erkennbar ist, weist der Schneideinsatz 20 eine Seitenfläche 22 auf, auf welcher eine ungerade Anzahl von Rippen 24 angeordnet ist.

Die Rippen 24 erstrecken sich sternförmig um die Befestigungsöffnung 23. Dabei ist insbesondere vorgesehen, dass die Rippen 24 in einem gleichmäßigen Abstand zueinander auf einer Kreisbahn angeordnet sind. Mit anderen Worten können die Rippen 24 so angeordnet sein, dass jede Rippe 24 zu einer Ecke eines regelmäßigen Fünfecks weist. Die Rippen 24 sind jedenfalls so positioniert, dass sie in die Vertiefungen 14 des Halters 10 eingreifen können. Insofern sind auch die Vertiefungen 14 des Halters 10 so ausgerichtet, dass sie sich vom Zentrum eines regelmäßigen Fünfecks zu dessen einzelnen Ecken erstrecken. Mit anderen Worten schließen jeweils zwei unmittelbar benachbarte Rippen 24, ebenso wie zwei unmittelbar benachbarte Vertiefungen 14 einen Winkel ein, wobei der Winkel zwischen allen Rippen 24 und zwischen allen Vertiefungen 14 identisch ist.

Die Rippen 24 auf der Seitenfläche 22 des Schneideinsatzes 20 weisen vorzugsweise eine trapezförmige Querschnittskontur auf. Denkbar ist auch, dass die Rippen 24 eine dreieckförmige Querschnittskontur aufweisen. Jedenfalls ist vorgesehen, dass sich die Rippen 24 ausgehend von der Seitenfläche 22 verjüngen, so dass die Rippen 24 eine selbstzentrierende Anordnung in den Vertiefungen 14 ermöglichen.

Um den Schneideinsatz 20 mit dem Halter 10 zu verbinden, wird die Seitenfläche 22 zunächst parallel zur Anlagefläche 12 ausgerichtet, wie dies in den Fig. 1 und 2 dargestellt ist. Anschließend wird der Schneideinsatz 20 in die Ausnehmung 11 eingesetzt, so dass einerseits die Seitenfläche 22 an der Anlagefläche 12 anliegt. Andererseits wird der Schneideinsatz 20 um eine gemeinsame Verbindungsachse, insbesondere die Mittelachse der Haltebohrung 13, der Befestigungsöffnung 23 und der Befestigungsschraube 30 so gedreht, dass die Schneidsegmente 21 mit der Werkzeugkontur 15 korrelieren. Beim Zusammenführen von Schneideinsatz 20 und Halter 10 gelangen die Rippen 24 dann in Eingriff mit den Vertiefungen 14. Die trapezförmige oder dreieckförmige Kontur der Rippen 24 sorgt dabei für eine Zentrierung und Ausrichtung des Schneideinsatzes 20 in der Ausnehmung 11.

Die Vertiefungen 14 sind vorzugsweise unterschiedlich gestaltet. Ein Teil der Vertiefungen 14 kann Haltenuten 14a bilden, wogegen ein anderer Teil der Vertiefungen 14 Aufnahmenuten 14b bildet. Bevorzugt ist es, wenn eine ungerade Anzahl von Haltenuten 14a vorgesehen ist. Die Haltenuten 14a unterscheiden sich von den Aufnahmenuten 14b durch ihre Formgebung. Während die Haltenuten 14a eine Kontur aufweisen, die im Wesentlichen der Kontur der Rippen 24 entspricht, weisen die Aufnahmenuten 14b vorzugsweise eine Dimension auf, die so gestaltet ist, dass die Rippen 24 nicht formschlüssig mit den Aufnahmenuten 14b in Anlage gelangen.

Konkret kann vorgesehen sein, dass die Haltenuten 14a ein negatives Trapezprofil aufweisen, das analog zu dem positiven Trapezprofil der Rippen 24 ausgebildet ist, so dass die Rippen 24 beim vollen Eingriff in die Haltenuten 14 mit diesen formschlüssig gekoppelt sind. Die Aufnahmenuten 14b können hingegen ein negatives Rechteckprofil oder andere Profilformen aufweisen, so dass die Rippen 24 zwar vollständig in die Aufnahmenuten 14b eintauchen können, zu den Seitenwänden der Aufnahmenuten 14b jedoch ein Spiel bestehen bleibt. Ohne die formschlüssige Fixierung in den Haltenuten 14a würden die Aufnahmenuten 14b also eine Drehung des Schneideinsatzes 20 in der Ausnehmung 11 zumindest in einem vorbestimmten Bereich erlauben. Eine solche Drehbewegung wird vorzugsweise ausschließlich durch die formschlüssige Verbindung zwischen den Rippen 24 und den Haltenuten 14a vermieden.

Die Fixierung des Schneideinsatzes 20 in der Ausnehmung 11 des Halters 10 erfolgt durch die Befestigungsschraube 30. Diese kann die Befestigungsöffnung 23 des Schneideinsatzes 20 durchdringen und in Zusammenwirken mit dem Innengewinde der Haltebohrung 13 den Schneidsatz 20 gegen den Halter 10 drängen. Die Befestigungsschraube 30 kann vorzugsweise einen Senkkopf aufweisen, so dass auch durch die Befestigungsschraube 30 eine Zentrierung des Schneideinsatzes 20 in der Ausnehmung 11 des Halters 10 erfolgt.

Die Gestaltung des Schneideinsatzes 20 ist besonders gut in Fig. 4 erkennbar. Der Schneideinsatz 20 umfasst bei dem dargestellten Ausführungsbeispiel vorzugsweise fünf Schneidsegmente 21, die sich sternförmig vom Zentrum des Schneideinsatzes 20, insbesondere von der Befestigungsöffnung 23 ausgehend nach außen, erstrecken. Die Schneidsegmente 21 weisen jeweils eine Schneidspitze 25 auf. Die Schneidspitze 25 bildet das schneidende Element bei der spanenden Bearbeitung. Die Schneidspitze 25 kann abhängig von der jeweils gewünschten spanenden Bearbeitung unterschiedlich gestaltet sein. Beispielsweise kann die Schneidspitze 25 als gerade Schneidkante ausgebildet sein, um breite Späne von Metall oder anderem Material eines Werkstücks abzutragen. Es ist auch möglich, dass die Schneidspitze durch einen schmalen Grat gebildet ist, um beispielsweise ein Gewinde in ein Werkstück einschneiden zu können.

In Fig. 4 ist auch ersichtlich, dass die Schneidspitzen 25 zueinander jeweils einen einheitlichen Abstand aufweisen. Konkret spannen die Schneidspitzen im Wesentlichen ein regelmäßiges Vieleck, bei dem hier gezeigten Ausführungsbeispiel ein regelmäßiges Fünfeck, auf. Analog sind auch die Rippen 24 derart sternförmig um die Befestigungsöffnung 23 angeordnet, dass diese ebenfalls ein regelmäßiges Fünfeck aufspannen. Das regelmäßige Fünfeck, das durch die Rippen 24 aufgespannt ist, ist hingegen gegenüber dem regelmäßigen Fünfeck, das durch die Schneidspitzen 25 definiert ist, verdreht angeordnet. Mit anderen Worten ist die Sternform der Rippen 24 gegenüber der Sternform der Schneidsegmente 21 verdreht angeordnet. Es besteht also ein Verdrehwinkelversatz zwischen den Rippen 24 und den Schneidsegmenten 21.

Während alle Rippen 24 vorzugsweise identisch ausgebildet sind, sind die Vertiefungen 14 als Gegenstück zu den Rippen 24 unterschiedlich geformt. Fig. 5 zeigt deutlich, dass bei dem hier dargestellten Ausführungsbeispiel mit fünf Vertiefungen 14 drei dieser Vertiefungen 14 als Haltenuten 14a ausgebildet sind. Zwei weitere Vertiefungen 14 sind durch Aufnahmenuten 14b gebildet. Von den fünf Vertiefungen 14 sind vorzugsweise drei Vertiefungen 14 als Haltenuten 14a ausgebildet.

Die Haltenuten 14a sind vorzugsweise so zueinander ausgerichtet, dass sie gemeinsam im Wesentlichen eine Y-Form bilden. Zwei dem vorderen Ende des Halters 10 zugewandte Haltenuten 14a sind vorzugsweise unmittelbar benachbart zueinander angeordnet. Eine dritte Haltenut 14a ist so ausgerichtet, dass sie im Wesentlichen in Richtung zum Befestigungsende des Halters 10 bzw. zur Bearbeitungsmaschine weist. Zwischen der dritten Haltenut 14a und der jeweils im Uhrzeigersinn und Gegenuhrzeigersinn nächstfolgenden Haltenut 14a ist jeweils eine Aufnahmenut 14b angeordnet. Die Vertiefungen 14 schließen jeweils mit ihrer unmittelbar benachbarten Vertiefung 14 einen Winkel ein, der zwischen allen Vertiefungen 14 identisch ist. Insbesondere entspricht dieser Winkel dem Winkel zwischen zwei Rippen 24 des Schneideinsatzes 20.

Durch die besondere Anordnung der Haltenuten 14a in einer Y-Form wird sichergestellt, dass der Schneideinsatz 20 in der Ebene der Anlagefläche 11 fest und präzise ausgerichtet ist. Insbesondere können so Kräfte, die bei der spanenden Bearbeitung über das Schneidsegment 21, welches von dem Halter 10 vorsteht und somit direkt im Eingriff mit dem Werkstück ist, eingeleitete Kräfte gut abgefangen werden. Ein Vibrieren oder sonstige Bewegungen zwischen Schneideinsatz 20 und Halter 10 werden so unterbunden. Die beiden Aufnahmenuten 14b bilden hingegen einen Spielraum für den Schneideinsatz 20, so dass unter anderem auch thermisch bedingte Ausdehnungen oder sonstige Verspannungen im Schneideinsatz 20 nicht zu einer Vibration und damit einer Verschlechterung der Oberflächengüte des zu bearbeitenden Werkstücks führen.

### Bezugszeichen

- 10: Halter
- 11: Ausnehmung
- 12: Anlagefläche
- 13: Haltebohrung
- 14: Vertiefung
- 14a: Haltenut
- 14b: Aufnahmenut
- 15: Werkzeugkontur

- 20: Schneideinsatz
- 21: Schneidsegment
- 22: Seitenfläche
- 23: Befestigungsöffnung
- 24: Rippe
- 25: Schneidspitze

- 30: Befestigungsschraube

## Patentansprüche

1. Schneidwerkzeug zur spanenden Bearbeitung von Werkstoffen, insbesondere Metall, mit einem Halter (10), der eine Ausnehmung (11) zur Aufnahme eines Schneideinsatzes (20) aufweist, wobei die Ausnehmung (11) eine Anlagefläche (12) umfasst, die sich um eine Haltebohrung (13) erstreckt und in welcher mehrere sternförmig um die Haltebohrung (13) angeordnete Vertiefungen (14) ausgebildet sind,
**gekennzeichnet durch**
einen Schneideinsatz (20) zur Verbindung mit dem Halter (10), wobei der Schneideinsatz (20) eine ungerade Anzahl von Schneidsegmenten (21) und auf einer Seitenfläche (22) eine ungerade Anzahl von Rippen (24) aufweist, die sternförmig um eine Befestigungsöffnung (23) angeordnet sind, wobei die Rippen (24) so positioniert und zueinander ausgerichtet sind, dass sie in die Vertiefungen (14) des Halters (10) eintauchen können.

2. Schneidwerkzeug nach Anspruch 1
**dadurch gekennzeichnet, dass**
die Vertiefungen (14) in der Ausnehmung (11) des Halters (10) Haltenuten (14a) und Aufnahmenuten (14b) umfassen, wobei die Haltenuten (14a) komplementär zur Form der Rippen (24) ausgebildet sind, um einzelne Rippen (24) formschlüssig zu halten, und die Aufnahmenuten (14b) größer als die Rippen (24) ausgebildet sind, um einzelne Rippen (24) mit Spielpassung aufzunehmen, und wobei wenigstens drei Vertiefungen (14) als Haltenuten (14a) ausgebildet sind.

3. Schneidwerkzeug nach Anspruch 1 oder 2
**dadurch gekennzeichnet, dass**
die Rippen (24) eine trapezförmige oder dreiecksförmige Querschnittkontur aufweisen.

4. Schneidwerkzeug nach einem der vorhergehenden Ansprüche
**dadurch gekennzeichnet, dass**
die Haltenuten (14a) zueinander Y-förmig ausgerichtet sind.

5. Schneidwerkzeug nach einem der vorhergehenden Ansprüche
**dadurch gekennzeichnet, dass**
die Vertiefungen (14) winklig zueinander ausgerichtet sind, wobei die Winkel zwischen den benachbarten Vertiefungen (14) gleich sind.

6. Schneidwerkzeug nach einem der vorhergehenden Ansprüche
**dadurch gekennzeichnet, dass**
die Haltebohrung (13) ein Innengewinde zur Aufnahme einer Befestigungsschraube (30) aufweist.

7. Schneidwerkezeug nach einem der vorhergehenden Ansprüche
**dadurch gekennzeichnet, dass**
die Befestigungsöffnung (23) als, insbesondere zylinderförmige, Durchgangsöffnung ausgebildet ist.

8. Schneidwerkzeug nach einem der vorhergehenden Ansprüche
**dadurch gekennzeichnet, dass**
die Schneidsegmente (21) sternförmig um die Befestigungsöffnung (23) angeordnet sind.

9. Schneidwerkzeug nach einem der vorhergehenden Ansprüche
**dadurch gekennzeichnet, dass**
die Anzahl der Schneidsegmente (21) gleich der Anzahl der Rippen (24) ist.

10. Schneidwerkzeug nach einem der vorhergehenden Ansprüche
**dadurch gekennzeichnet, dass**
die Schneidsegmente (21) jeweils eine Schneidspitze (25) aufweisen, wobei alle Schneidspitzen (25) gemeinsam ein virtuelles, gleichseitiges Vieleck aufspannen.

11. Schneidwerkzeug nach Anspruch 10
**dadurch gekennzeichnet, dass**
das gleichseitige Vieleck ein regelmäßiges Fünfeck ist.

12. Set zur Herstellung eines Schneidwerkzeugs nach einem der vorhergehenden Ansprüche mit wenigstens einem Halter (10), insbesondere gemäß dem Oberbegriff des Patentanspruchs 1, und mehreren unterschiedlichen Schneideinsätzen (20), insbesondere gemäß dem kennzeichnenden Teil des Patentanspruchs 1, die austauschbar mit dem Halter (10) verbindbar, insbesondere mittels einer Befestigungsschraube (30) verschraubbar, sind.
